# EUROPÄISCHE PATENTSCHRIFT

(11) **EP 1 563 959 B1**
(45) Veröffentlichungstag und Bekanntmachung des Hinweises auf die Patenterteilung: **23.03.2011**
(21) Anmeldenummer: 05001333.3
(22) Anmeldetag: 24.01.2005
(51) Int. Cl.: B25B 13/50, F16B 23/00

(54) **Spannsystem**
Clamping system
Système de serrage

(30) Priorität: 17.02.2004 DE 102004007871
(43) Veröffentlichungstag der Anmeldung: 17.08.2005
(73) Patentinhaber: Robert Koch GmbH, 72469 Tieringen (DE)
(72) Erfinder: Koch, Robert, 72469 Tieringen (DE)
(74) Vertreter: Maser, Jochen

(56) Entgegenhaltungen:
- DE-A1- 10 302 529
- DE-U1- 20 119 008
- DE-U1- 29 907 998

## Beschreibung

Die Erfindung betrifft ein Spannsystem aus einer Spannmutter mit stirnseitig angeordneten Nocken und aus einem zum Anziehen und Lösen der Spannmutter vorgesehenen Schlüssel, der ebenfalls stirnseitig Nocken aufweist.

Aus der DE 299 07 998 U1 ist ein System bekannt, bei dem die Spannmutter mit stirnseitig, radial ausgerichteten Nuten und mit schwalbenschwanzförmigem Querschnitt versehen ist, in die ein Schlüssel mit Nocken, die ebenfalls einen schwalbenschwanzförmigen Querschnitt aufweisen, zum Spannen und Lösen der Spannmutter eingreift. Die Schwalbenschwanzverbindung zwischen dem Schlüssel und der Spannmutter sollen ein unbeabsichtigtes Abrutschen des Schlüssels beim Spannvorgang verhindern.

Diese Anordnung weist den Nachteil auf, dass in den Ecken der schwalbenschwanzförmigen Nuten aufgrund der hohen auftretenden Kerbwirkung die Gefahr der Beschädigung und sogar des Abreißens der Nocken vom Schlüssel oder von der Spannmutter besteht. Ein weiterer Nachteil besteht darin, dass ein Abrutschen des Schlüssels zur Spannmutter aufgrund der Anordnung der Nuten gegeben ist.

Aus der DE 201 19 008 U1 geht ebenfalls ein Spannsystem hervor, bei dem die auf der Stirnseite der Spannmutter angeordneten Nuten einen schwalbenschwanzförmigen Querschnitt aufweisen und der Schlüssel mit einem Schlüsselkopf versehen ist, dessen Nocken zum Eingriff in die schwalbenschwanzförmigen Nuten ausgebildet sind.

Um das Abrutschen des Schlüssels gegenüber der Spannmutter zu vermeiden, ist vorgesehen, dass die inneren Kanten der Nuten in radialer Richtung verlaufen und sich zur Mitte der Spannmutter hin gleichmäßig verjüngen. Diese Ausführungsform weist ebenfalls weiterhin den Nachteil der hohen auftretenden Kerbwirkung und somit der bestehenden Gefahr von Beschädigungen an der Spannmutter oder des Spannschlüssels auf.

Aus der DE 103 02 529 A1 ist ein Spannsystem bekannt geworden, welches gegenüber der DE 201 19 008 U1 dahingehend abweicht, dass anstelle des schwalbenschwanzförmigen Querschnitts der Nuten ein S-förmiges Profil der Seitenflanken der Nuten beziehungsweise Nocken vorgeschlagen wird. Dieses S-förmige Profil der Seitenflanken verringert die hohen auftretenden Kerbwirkungen, jedoch ist die Herstellung sehr kostenintensiv. Darüber hinaus ist erforderlich, dass die Nocken des Spannschlüssels den Nocken der Spannmutter in exakter Weise entsprechen müssen, um ein Anziehen und Lösen zu ermöglichen. Durch das S-förmige Profil wird die Abrutschgefahr des Schlüssels von der Spannmutter beim Anziehen und Lösen erhöht.

Der Erfindung liegt deshalb die Aufgabe zugrunde, ein Spannsystem bestehend aus einer Spannmutter und einem Schlüssel bereitzustellen, bei dem die Bruch- und Abrutschgefahr weitgehend eliminiert sind.

Diese Aufgabe wird erfindungsgemäß durch die Merkmale des Anspruchs 1 gelöst.

Die weiteren vorteilhaften Ausführungsformen und Weiterbildungen der Erfindung sind in den weiteren auf den Anspruch 1 rückbezogenen Ansprüchen angegeben.

Durch die erfindungsgemäße Ausgestaltung von zumindest einer an der Spannmutter oder des Schlüssels vorgesehen Seitenflanke der Nocken, die zumindest einen Abschnitt aufweisen, der eine Hinterschneidung umfasst und zumindest einen weiteren Abschnitt aufweisen, der sich von einer Oberfläche des Nockens bis zum Boden eines zwischen den Nocken gebildeten Zwischenraums erstreckt, wird ermöglicht, dass einerseits die Spannauflage zum Anziehen und Lösen der Spannmutter maximiert ist und gleichzeitig durch die Ausbildung der Hinterschneidung die Abrutschgefahr verhindert wird. Somit kann ein sicheres Spannen und Lösen der Spannmutter gegeben sein, bei der die Bruchgefahr der Nocken verhindert ist.

Nach einer vorteilhaften Ausgestaltung der Erfindung ist vorgesehen, dass der die Hinterschneidung aufweisende Abschnitt einen Stegabschnitt umfasst, der in radialer Richtung zur Mittelebene gesehen gegenüber dem weiteren Abschnitt hervorsteht. Diese Ausgestaltung erhöht die Abrutschgefahr des Schlüssels unmittelbar nach dem Aufsetzen des Schlüssels auf der Spannmutter zumindest in radialer Richtung. Die Stegabschnitte der Nocken am Schlüssel hintergreifen die Stegabschnitte der Nocken an der Mutter, so dass ein Abrutschen durch Verkippen oder einer Verschiebung des Schlüssels in einer der Mittelebenen zur Spannmutter verhindert ist.

Die in dem zumindest einen Abschnitt angeordnete Hinterschneidung ist vorteilhafterweise rechteckförmig ausgebildet. Eine derartige Geometrie weist den Vorteil einer einfachen Herstellung und einer verringerten Kerbwirkung gegenüber einer schwalbenschwanzförmigen Ausgestaltung auf. Des Weiteren kann nach einer alternativen Ausführungsform vorgesehen sein, dass die Hinterschneidung als eine Kombination aus einem rechteckförmigen und einem trapezförmigen Querschnitt hergestellt ist. Durch die trapezförmige Ausgestaltung kann eine zusätzliche Zentrierfunktion zwischen den Nocken des Schlüssels und den in der Spannmutter gegeben sein.

Vorteilhafterweise ist vorgesehen, dass der die Hinterschneidung aufweisende Abschnitt wenigstens ein Viertel der Länge des Nockens in radialer Richtung gesehen umfasst. Dadurch ist eine hinreichende Angriffsfläche der einander gegenüberliegenden Abschnitte der Nocken des Spannsystems für den sicheren Eingriff gegeben.

Vorteilhafterweise ist der zumindest eine die Hinterschneidung aufweisende Abschnitt an eine Außenseite der Nocken angrenzend vorgesehen. Dadurch werden die Hebelverhältnisse zur Verringerung der Abrutschgefahr erhöht. Gleichzeitig kann ermöglicht sein, dass die Krafteinleitung zum Lösen und Anziehen der Spannmutter in einer mittleren Radialebene bezüglich der Breite der ringförmigen Spannmutter ermöglicht ist.

Zumindest die Nocken der Spannmutter oder die Nocken des Spannschlüssels weisen vorteilhafterweise in einer Draufsicht gesehen einen S-förmigen oder doppel-S-förmigen Verlauf auf. Dadurch können Kraftübertragungsverhältnisse optimiert und eine Anordnung geschaffen werden, welche scharfe Kanten vermeidet. Diese Verlaufsformen sind zumindest an der Spannmutter oder dem Schlüssel vorgesehen. Es ist nicht zwingend erforderlich, dass diese Verlaufsformen sowohl an Nocken der Spannmutter und des Spannschlüssels vorgesehen sind.

Eine weitere alternative Ausgestaltung der Nocken zumindest an der Spannmutter oder dem Spannschlüssel in der Draufsicht gesehen sieht vor, dass ein Abschnitt einen geradlinigen Verlauf und ein weiterer Abschnitt einen halbkreisförmigen, die Hinterschneidung bildenden Verlauf umfasst. Dadurch können wiederum die Funktionen der Abrutschsicherung und der großen Spannfläche zum Anziehen und Lösen der Spannmutter bei Reduzierung der Kerbwirkung verwirklicht werden.

Der weitere Abschnitt des Nockens sieht vorteilhafterweise vor, dass der sich von der Oberfläche des Nockens bis zum Boden des Zwischenraumes erstreckende Abschnitt als linienförmiger oder flächiger Spannbereich ausgebildet ist. Dadurch kann eine maximale Kraftübertragung gegeben sein, wobei dieser linienförmige oder flächige Spannbereich vorzugsweise rechtwinklig zur Drehrichtung angeordnet ist, so dass eine maximale Kraftübertragung aufgrund der eingeleiteten Drehung zum Anziehen und Lösen der Spannmutter ermöglicht ist.

Vorteilhafterweise ist vorgesehen, dass dieser Spannbereich durch Einsatzelemente ausgebildet sind, die zumindest eine höhere Oberflächenhärte als die angrenzenden Bereiche aufweist. Dadurch ist ein langlebiges Spannsystem sichergestellt.

Die Erfindung sowie weitere vorteilhafte Ausführungsformen und Weiterbildungen derselben werden im Folgenden anhand den in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Draufsicht auf eine erfindungsgemäße Spannmutter mit sechs Nocken,
- Figur 2: eine schematische Schnittdarstellung entlang der Linie II-II in Figur 1,
- Figuren 3a und b: eine schematische Seitenansicht und Draufsicht auf einen Spannschlüssel mit drei Nocken,
- Figur 4: eine schematische Draufsicht auf eine alternative Ausführungsform einer Spannmutter gemäß Figur 1,
- Figur 5: eine schematische Draufsicht auf zwei alternative Ausführungsformen einer Spannmutter gemäß Figur 1 und
- Figur 6: eine schematische Detailansicht einer alternativen Ausgestaltung eines eine Hinterschneidung aufweisenden Abschnittes zu Figur 2.

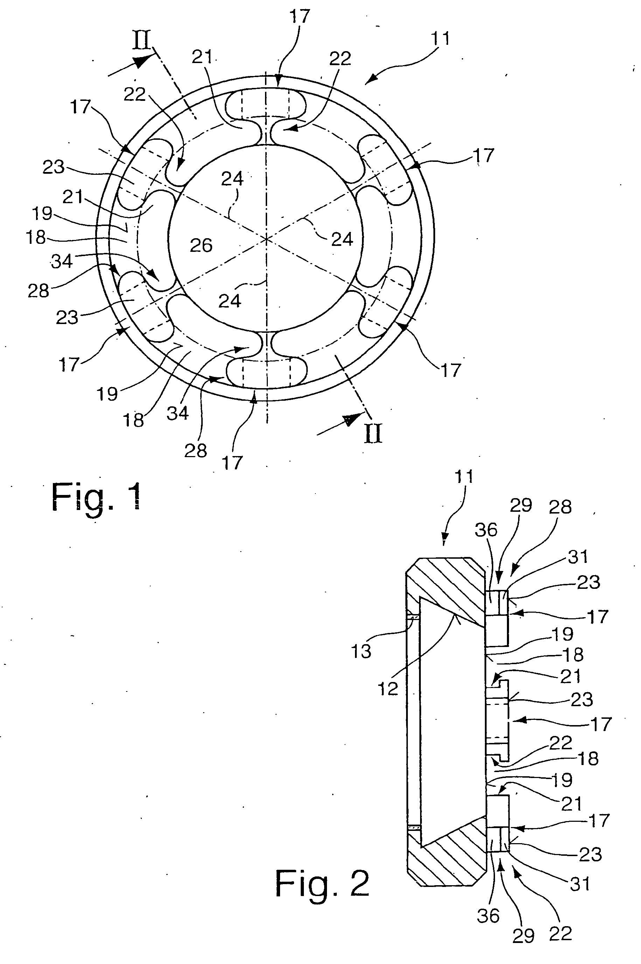

In Figur 1 ist eine erfindungsgemäße Spannmutter dargestellt. Figur 2 zeigt eine schematische Schnittdarstellung der Spannmutter 11 gemäß Figur 1 entlang der Linie II-II. Die Spannmutter 11 gemäß der Schnittdarstellung weist wie bei herkömmlichen Spannmuttern bekannt, einen Innenkonus 12 für das zentrierte Erfassen einer Spannzange und ein Gewinde 13 zum Einschrauben in die Aufnahme einer Werkzeugmaschinenspindel oder einer Werkzeugaufnahme auf.

Auf einer Stirnseite der Spannmutter 11 sind axial hervorspringende Nocken 17 vorgesehen. Zwischen den Nocken 17 sind Zwischenräume 18 gebildet, welche eine Boden 19 aufweisen. Von dem Boden 19 ausgehend erstrecken sich Seitenflanken 21, 22 bis zur Oberfläche 23 der Nocken 17. Die Nocken 17 sind gleichmäßig über den Umfang einer Stirnfläche der Spannmutter 11 angeordnet und Mittelebenen 24 zugeordnet, die durch eine Längsachse 26 führen.

Die Oberfläche 23 der Nocken 17 ist durch einen S-förmigen Verlauf begrenzt. Der Nocken 17 umfasst einen ersten Abschnitt 28 einer Seitenflanke 21, 22, der eine Hinterschneidung 29 umfasst. Diese Hinterschneidung 29 ist, wie aus Figur 2 hervorgeht, rechteckförmig ausgebildet und weist einen Stegabschnitt 31 auf, der in radialer Richtung zur Mittelebene 24 gesehen gegenüber einem weiteren Abschnitt 34 der Seitenflanken 21, 22 hervorsteht.

Der weitere Abschnitt 34 der Seitenflanken 21, 22 des Nockens 17 erstreckt sich vorzugsweise vollflächig vom Boden 19 bis zur Oberfläche 23 des Nockens 17. Dieser Abschnitt 34 ist beispielsweise halbkreisförmig ausgebildet und bildet einen Teil des S-förmigen Verlaufs der Seitenflanke 21, 22.

Ein durch die Hinterschneidung 29 ausgebildeter Seitenflankenabschnitt 36 verläuft nach einer ersten Ausführungsform parallel zur Mittelebene 24. In einer alternativen Ausführungsform kann sich dieser Seitenflankenabschnitt 36 auch zur Längsmittelachse 26 verjüngen. Des Weiteren kann der Seitenflankenabschnitt 36 zur Mittelebene 24 nach innen gekrümmt ausgebildet sein, so dass ein halbkreisförmiger Stegbereich 31 eingreifen kann. Der Seitenflächenabschnitt 36 beziehungsweise der erste Abschnitt 28 erstrecken sich gemäß der Ausführungsform in Figur 1 in radialer Richtung zur Längsmittelachse 26 gesehen über die Hälfte der Länge des Bodens 19. Um eine Abrutschsicherung sicherzustellen, umfasst die Länge des ersten Abschnitts 28 zumindest ein Viertel der Länge des Nockens 17 entlang der Mittelebene 24.

Die in Figur 1 dargestellte Ausgestaltung des Nockens 17 kann auch um 180 ° gedreht vorgesehen sein, so dass der erste Abschnitt 28 an den Innenkonus 12 anschließend vorgesehen ist und der weitere Abschnitt 34 an den Außenumfang der Spannmutter 11 anschließt.

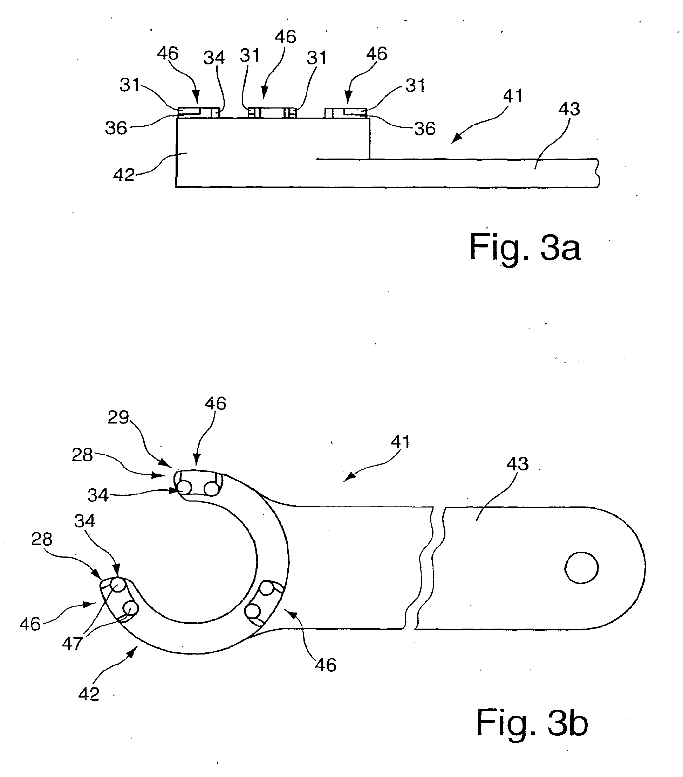

In den Figuren 3a und b ist ein Spannschlüssel 41 in einer Seitenansicht und einer Draufsicht dargestellt. Der Schlüssel 41 besitzt einen Kopf 42 und einen Griff 43. Der Kopf 42 hat die Form eines Ringsegmentes von beispielsweise 270°. An den jeweiligen Enden des Ringsegmentes ist jeweils ein Nocken 46 vorgesehen. Mittig zu diesen beiden Nocken 46 ist ein dritter Nocke 46 angeordnet. Die Positionierung der Nocken 46 ist auf die Position beziehungsweise auf die Zwischenräume 18 der Spannmutter 11 abgestellt, so dass eine beliebige Positionierung des Spannschlüssels zur Spannmutter 11 gegeben ist.

Die Nocken 46 weisen einen ersten Abschnitt 28 auf, der eine Hinterschneidung 29 umfasst. Diese ist in Analogie zum Nocken 17 durch einen Stegabschnitt 31 ausgebildet. Der Seitenflankenabschnitt 26 kann geradlinig ausgebildet sein und parallel zur Mittelebene 24 verlaufen oder auch einen gekrümmten Verlauf umfassen, der vorzugsweise nach innen gekrümmt zur Mittelebene 24 ausgebildet ist. An diesen ersten Abschnitt 28 angrenzend oder diesen zumindest teilweise überschneidend ist der weitere Abschnitt 34 vorgesehen, der einen linienförmigen oder flächigen Spannbereich oder Druckbereich bildet und sich vorzugsweise vollständig über die Höhe des Nockens 17 oder 46 erstreckt. Im Ausführungsbeispiel ist der Abschnitt 34 durch gehärtete zylindrische Stifte 47 ausgebildet, welche eingesetzt werden. Diese Stifte 47 weisen vorteilhafterweise zumindest eine Oberflächenhärte auf, die größer als die angrenzenden Materialien ist, aus denen der Spannschlüssel 41 und die Spannmutter 11 hergestellt sind. Der weitere Abschnitt 34 erstreckt sich gemäß dem Ausführungsbeispiel nicht bis zur inneren Umfangsfläche des Kreissegmentes. Alternativ kann diese jedoch auch vorgesehen sein. Dieser Abschnitt zwischen der Innenumfangsfläche des Kreissegmentes und dem Abschnitt 34 kann als vollflächige Seitenflanke ausgebildet sein oder in Analogie zum ersten Abschnitt 28 des Nockens 46.

Die dem Abschnitt 34 zugeordneten Spannbereiche oder Druckflächen der Spannmutter 11 und des Spannschlüssels 41 sind bevorzugt auf dem selben Umfangskreis angeordnet, so dass eine einheitliche Krafteinleitung ermöglicht ist.

Bei Ansetzen des Spannschlüssel 41 auf der Spannmutter 11 greifen die Nocken 46 des Spannschlüssels 41 in die Zwischenräume 18 der Spannmutter 11 ein. Bei einem anschließenden Verdrehen des Spannschlüssel 41 gegenüber der Spannmutter 11 greifen die Abschnitte 28 ineinander. Gleichzeitig kommen die Abschnitte 34 vorteilhafterweise über die gesamte Höhe der jeweiligen Nocken 17, 46 vollflächig zur Anlage. Dadurch kann eine maximale Kraftübertragung erzielt werden, wobei die Abrutschgefahr entlang der Mittelebene durch die ineinander greifenden Stegabschnitte 31 der ersten Abschnitte 28 verhindert wird, insbesondere durch die in radialer Richtung gesehene versetzte Anordnung der Abschnitte 28 und 34. Gleichzeitig wird durch das Ineinandergreifen der Abschnitte 28 ein Verkippen des Schlüssels gegenüber der Spannmutter verhindert.

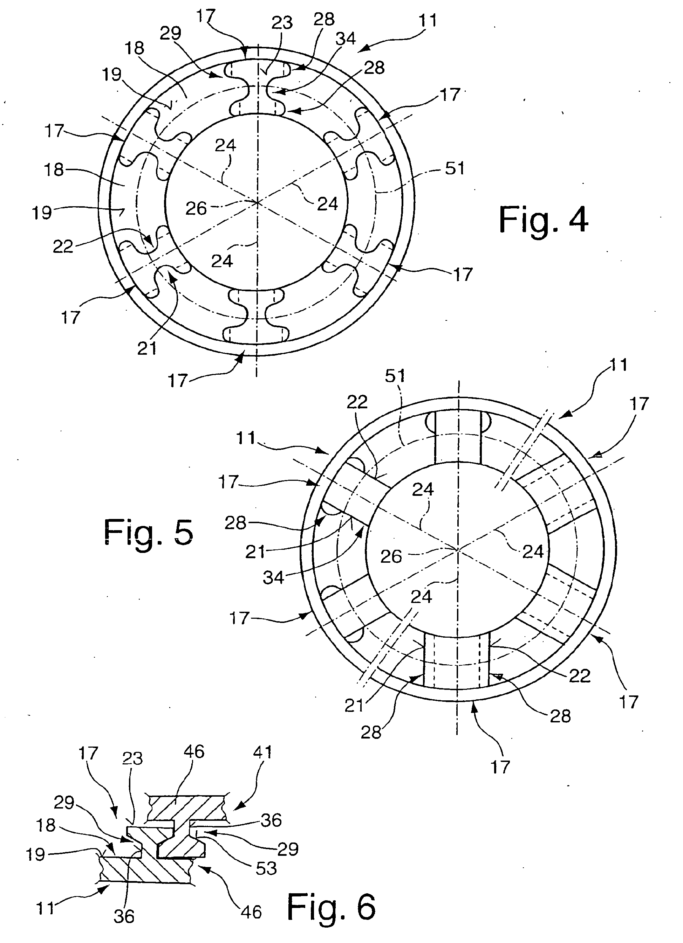

Die Ausführungsform des beispielhaft dargestellten Spannschlüssels 41 ermöglicht sowohl das Betätigen von einer Spannmutter gemäß Figur 1 als auch den weiteren, nachfolgend noch näher beschriebenen Ausführungsformen gemäß den Figuren 4 und 5. Des Weiteren ist dieser Spannschlüssel 41 auch dazu geeignet, die bisher bekannten Spannmuttern 11 von Spannsystemen anzuziehen und zu lösen.

In Figur 4 ist eine alternative Ausführungsform einer Spannmutter 11 zu Figur 1 dargestellt. Bei dieser Ausführungsform ist die Oberfläche 23 des Nockens 17 durch einen doppel-S-förmigen Verlauf begrenzt. Die Seitenflanken 21, 22 folgen diesem doppel-S-förmigen Verlauf. Der erste Abschnitt 18 ist zweifach vorgesehen, grenzt einerseits an einen Außenumfang der Spannmutter 11 und andererseits an einen Innenumfang der Spannmutter 11 an und ist durch den Stegabschnitt 31 ausgebildet.

Diese Ausführungsform weist den Vorteil auf, dass durch die Anordnung eines weiteren Abschnitts 34 in der mittleren Radialebene 51 der Spannmutter 11 eine zusätzliche Zentrierung für die Druck- oder Spannbereiche gegeben ist. Alternativ können auch ein erster Abschnitt 38 und zwei weitere Abschnitte 34 vorgesehen sein.

Die Seitenflankenabschnitte 36 der ersten Abschnitte 28 können auf einer parallelen Linie zur Mittelebene 24 oder versetzt zueinander vorgesehen sein, so dass der Abstand der Seitenflankenabschnitte 36 nahe dem Innenkonus 18 geringer ist als der Abstand der Seitenflankenabschnitte 36 nahe dem Außenumfang der Spannmutter 11. Die Seitenflankenabschnitte 36 der Seitenflanken 21 und 22 können auch auf einer Linie radial sich verjüngend zur Längsmittelachse 34 ausgebildet sein.

In Figur 5 ist eine Draufsicht auf zwei alternative Ausführungsformen einer Spannmutter 11 dargestellt. Die auf der rechten Seite dargestellten Nocken 17 weisen parallel zur Mittelebene 24 verlaufende geradlinige Seitenflanken 21, 22 auf und umfassen ausschließlich einen ersten Abschnitt 28.

Die zweite alternative Ausführungsform der Nocken 17, welche auf der linken Hälfte dargestellt sind, umfassen einen ersten Abschnitt 28, der eine Hinterschneidung 29 umfasst und einen weiteren Abschnitt 34, der vollflächig ausgebildet ist. In diesem Ausführungsbeispiel sind entlang der Mittelebene 24 gesehen die beiden Abschnitte 28, 34 beispielsweise gleich groß ausgebildet. Der Seitenflankenabschnitt 36 des ersten Abschnitts 28 geht bündig in die Seitenflanke des Abschnitts 34 über. Der Stegabschnitt 31 steht jeweils halbkreisförmig oder kreissegmentförmig gegenüber dem Seitenflankenabschnitt 36 hervor. Alternativ kann der Stegabschnitt auch rechteckförmig oder andere geometrische Ausgestaltungen zur Bildung einer Hinterschneidung 29 umfassen. Dies gilt auch für die weiteren Ausführungsformen.

Die Anordnung und Ausgestaltung der in den alternativen Ausführungsformen beschriebenen Nocken 17 der Spannmutter 11 können um 180 ° gedreht an der Stirnfläche der Spannmutter 11 vorgesehen sein. Ebenso ist ermöglicht, dass die Nocken 17 am Spannschlüssel 41 vorgesehen und die Nocken 46 an der Spannmutter 11 ausgebildet sind.

Des Weiteren kann vorgesehen sein, dass die vorbeschriebenen Ausführungsformen der Nocken beliebig miteinander kombiniert werden.

Alternativ zur rechteckförmig ausgebildeten Hinterschneidung 29 eines ersten Abschnitts 28 kann eine Hinterschneidung 29 gemäß Figur 6 vorgesehen sein. Diese Hinterschneidung 29 ist als eine Kombination aus einer rechteckförmigen und trapezförmigen Hinterschneidung vorgesehen. Durch eine schräg verlaufende Spannfläche 53 kann eine zusätzliche Zentrierfunktion ermöglicht sein. Gleichzeitig kann durch die Ausbildung des Seitenflankenabschnitts 36 die Kerbwirkung im Vergleich zum schwalbenschwanzförmigen Verlauf verhindert werden. Diese Ausgestaltung kann ebenfalls bei den vorbeschriebenen Ausführungsformen vorgesehen sein.

Die für die Spannmutter 11 und den Spannschlüssel 41 beschriebenen Merkmale sind beliebig miteinander kombinierbar und austauschbar. Die Anzahl der Nocken 17, 46 ist nur beispielhaft und kann entsprechend der Größe und des Einsatzfalles des Spannsystems variiert werden. Die vorstehende Beschreibung gilt ebenfalls für die Ausgestaltung von Nuten anstelle von Noppen.

## Patentansprüche

1. Spannsystem bestehend aus einer Spannmutter (11) mit stirnseitig angeordneten Nocken (17) und aus einem zum Anziehen und Lösen der Spannmutter (11) vorgesehenen Schlüssel (41), welcher stirnseitig Nocken (46) aufweist, **dadurch gekennzeichnet, dass** Seitenflanken (21, 22) der Nocken (17, 46) zumindest an der Spannmutter (11) oder des Schlüssels (41) in radialer Richtung verlaufend wenigstens einen Abschnitt (28) aufweisen, der eine Hinterschneidung (29) umfasst und zumindest einen weiteren Abschnitt (34) an den Seitenflanken (21, 22) aufweisen, der sich von einer Oberfläche (23) des Nockens (17, 46) bis zum Boden (19) eines zwischen den Nocken (17, 46) gebildeten Zwischenraumes (18) erstreckt.

2. Spannsystem nach Anspruch 1, **dadurch gekennzeichnet, dass** der die Hinterschneidung (29) aufweisende Abschnitt (28) einen Stegbereich (31) umfasst, der in radialer Richtung zur Mittelebene (24) gesehen gegenüber dem weiteren Abschnitt (34) hervorsteht.

3. Spannsystem nach Anspruch 1 oder 2, **dadurch gekennzeichnet, dass** die Hinterschneidung (29) in dem zumindest einen Abschnitt (28) rechteckförmig oder als rechteck- und trapezförmige Kombination ausgebildet ist.

4. Spannsystem nach einem der vorhergehenden Ansprüche, **dadurch gekennzeichnet, dass** der die Hinterschneidung (29) aufweisende Abschnitt (28) zumindest ein Viertel der Länge des Nockens (17) entlang der Mittelebene (24) gesehen umfasst.

5. Spannsystem nach einem der vorhergehenden Ansprüche, **dadurch gekennzeichnet, dass** der die Hinterschneidung (29) aufweisende Abschnitt (28) an eine radial äußere Seite des Nockens (17, 46) angrenzend vorgesehen ist.

6. Spannsystem nach einem der vorhergehenden Ansprüche, **dadurch gekennzeichnet, dass** zumindest die Nocken (17) der Spannmutter (11) oder die Nocken (46) des Spannschlüssels (41) in einer Draufsicht gesehen einen S-förmigen oder doppel-S-förmigen Verlauf aufweisen.

7. Spannsystem nach einem der Ansprüche 1 bis 5, **dadurch gekennzeichnet, dass** zumindest die Nocken (17) der Spannmutter (41) oder die Nocken (46) des Spannschlüssels (41) in der Draufsicht gesehen einen geradlinigen und einen halbkreis- oder rechteckförmigen, die Hinterschneidung (29) bildenden Verlauf aufweisen.

8. Spannsystem nach einem der vorhergehenden Ansprüche, **dadurch gekennzeichnet, dass** der von der Oberfläche (23) des Nockens (17, 46) bis zum Boden (19) des Zwischenraumes (18) verlaufende Abschnitt (34) als linienförmiger oder flächiger Spann- oder Druckbereich ausgebildet ist.

9. Spannsystem nach Anspruch 8, **dadurch gekennzeichnet, dass** der Spannbereich durch Einsetzelemente (47) ausgebildet ist, die zumindest eine gleiche oder höhere Oberflächenhärte als das angrenzende Material der Nocken (17, 46) aufweist.

## Claims

1. A clamping system consisting of a clamping nut (11) having cams (17) arranged on its end face and of a wrench (41) for tightening and slackening the clamping nut (11) which has cams (46) on its end face, **characterised in that** side flanks (21, 22) of the cams (17, 46), at least on the clamping nut (11) or on the wrench (41), have at least one sector (28) running radially and including an undercut (29), and have at least one further sector (34) arranged on the side flanks (21, 22) and extending from a surface (23) of the cam (17, 46) to the bottom (19) of an interspace (18) formed between the cams (17, 46).

2. The clamping system as claimed in claim 1, **characterised in that** the sector (28) including the undercut (29) comprises a land portion (31) which protrudes with respect to the further sector (34) when viewed in a radial direction toward the centre plane (24).

3. The clamping system as claimed in claim 1 or 2, **characterised in that** the undercut (29) in the at least one sector (28) is in the form of a rectangle or of a combination of a rectangular and a trapezoidal form.

4. The clamping system as claimed in any one of the preceding claims, **characterised in that** the sector (28) including the undercut (29) comprises at least a quarter of the length of the cam (17) as viewed along the centre plane (24).

5. The clamping system as claimed in any one of the preceding claims, **characterised in that** the sector (28) including the undercut (29) is provided adjacent to a radially outer side of the cam (17, 46).

6. The clamping system as claimed in any one of the preceding claims, **characterised in that** at least one of the cams (17) of the clamping nut (11) and the cams (46) of the wrench (41) have a contour extending in an S-shaped or a double S-shaped form when viewed in plan.

7. The clamping system as claimed in any one of claims 1 to 5, **characterised in that** at least one of the cams (17) of the clamping nut (41) and the cams (46) of the wrench (41), when viewed in plan, have a rectilinearly extending contour and a semi-circularly or rectangularly extending contour which forms the undercut (29).

8. The clamping system as claimed in any one of the preceding claims, **characterised in that** the sector (34) extending from the surface (23) of the cam (17, 46) to the bottom (19) of the interspace (18) is realised in the form of a linear or flat zone of application of tension or pressure.

9. The clamping system as claimed in claim 8, **characterised in that** said zone of application of tension is realised by means of insert members (47) having a surface hardness which is at least identical to, or higher than, that of the adjoining material of the cams (17, 46).

## Revendications

1. Système de serrage se composant d'un écrou tendeur (11) avec des cames (17) disposées sur la face frontale et d'une clé (41) prévue pour serrer et desserrer l'écrou tendeur (11) et qui présente des cames (46) sur la face frontale, **caractérisé en ce que** des flancs latéraux (21, 22) des cames (17, 46) présentent, au moins au niveau de l'écrou tendeur (11) ou de la clé (41), au moins une partie (28) s'étendant en sens radial, laquelle comprend une contre-dépouille (29), ainsi qu'au moins une autre partie (34) au niveau des flancs latéraux (21, 22), laquelle s'étend d'une surface (23) de la came (17, 46) jusqu'au fond (19) d'un espace intermédiaire (18) situé entre les cames (17, 46).

2. Système de serrage selon la revendication 1, **caractérisé en ce que** la partie (28) présentant la contre-dépouille (29) comprend une zone (31) qui, vue en sens radial par rapport au plan central (24), fait saillie par rapport à ladite autre partie (34).

3. Système de serrage selon la revendication 1 ou 2, **caractérisé en ce que** la contre-dépouille (29) est, dans ladite au moins une partie (28), de forme rectangulaire ou associe forme rectangulaire et forme trapézoïdale.

4. Système de serrage selon l'une des revendications précédentes, **caractérisé en ce que** la partie (28) présentant la contre-dépouille (29) comprend, le long du plan central (24), au moins un quart de la longueur de la came (17).

5. Système de serrage selon l'une des revendications précédentes, **caractérisé en ce qu'**il est prévu que la partie (28) présentant la contre-dépouille (29) soit contiguë à une face radialement extérieure de la came (17, 46).

6. Système de serrage selon l'une des revendications précédentes, **caractérisé en ce qu'**au moins les cames (17) de l'écrou tendeur (11) ou les cames (46) de la clé de serrage (41) présentent, dans une vue de dessus, une allure en forme de S ou en forme de double S.

7. Système de serrage selon l'une des revendications 1 à 5, **caractérisé en ce qu'**au moins les cames (17) de l'écrou tendeur (41) ou les cames (46) de la clé de serrage (41) présentent, dans la vue de dessus, une allure rectiligne et une allure semi-circulaire ou rectangulaire formant la contre-dépouille (29).

8. Système de serrage selon l'une des revendications précédentes, **caractérisé en ce que** la partie (34) s'étendant de la surface (23) de la came (17, 46) jusqu'au fond (19) de l'espace intermédiaire (18) est réalisée sous forme de zone de serrage ou de pression linéaire ou plane.

9. Système de serrage selon la revendication 8, **caractérisé en ce que** la zone de serrage est formée par des inserts (47), lesquels présentent au moins une dureté de surface identique ou supérieure à celle du matériau voisin constituant les cames (17, 46).
